# EUROPEAN PATENT APPLICATION

(11) **EP 4 830 950 A1**
(43) Date of publication of application: **28.10.2026**
(21) Application number: 25849975.5
(22) Date of filing: 02.04.2025
(51) Int. Cl.: B60H 1/00

(54) **HEAT EXCHANGER ASSEMBLY AND VEHICLE**

(30) Priority: 06.08.2024 CN 202411068935
(71) Applicant: Chery Automobile Co., Ltd., Wuhu, Anhui 241006 (CN)
(72) Inventor: YONG, Anjiao, Wuhu, Anhui 241006 (CN); HOU, Fazhen, Wuhu, Anhui 241006 (CN); ZHU, Daomin, Wuhu, Anhui 241006 (CN); WANG, Shuang, Wuhu, Anhui 241006 (CN); FU, Yonghong, Wuhu, Anhui 241006 (CN)
(74) Representative: Adamson Jones
(86) International application number: PCT/CN2025/086795
(87) International publication number: WO 2026/031605

(57) **Abstract**

A heat exchanger assembly and a vehicle. The heat exchanger assembly comprises a first heat exchanger (1), a second heat exchanger (2), and a third heat exchanger (3). The first heat exchanger is a heat exchanger for an air conditioner and a battery; the second heat exchanger is a heat exchanger for a motor assembly and an intercooling system; the third heat exchanger is a heat exchanger for an engine coolant; the first heat exchanger, the second heat exchanger, and the third heat exchanger are located in an engine compartment of a vehicle; the first heat exchanger, the second heat exchanger, and the third heat exchanger are sequentially stacked in a first direction and are all connected to the engine compartment, and the first direction is an air inlet direction of the engine compartment. The heat exchange of each heat exchanger in the heat exchanger assembly is relatively balanced, thereby well ensuring the normal heat exchange of each heat exchanger, and further well ensuring the normal use of the vehicle.

## Description

The present disclosure claims priority to Chinese Patent Application No. 202411068935.3, filed on August 6, 2024 and entitled "HEAT EXCHANGER ASSEMBLY AND VEHICLE", the disclosure of which is incorporated herein by reference in its entirety.

### TECHNICAL FIELD

The present disclosure relates to the field of automobiles, and in particular, to a heat exchanger assembly and a vehicle.

### BACKGROUND

With the development of electric vehicles, more and more consumers are opting to purchase electric cars as their primary means of daily transportation. To ensure the proper functioning of electric vehicles, it is necessary to regulate the temperature of various components, such as the car engine, cabin, and generator, etc.

Generally, the heat exchange method for various components is to arrange multiple heat exchangers inside the engine compartment of a vehicle, and use the wind entering the engine compartment to exchange heat with each heat exchanger, thereby regulating the temperature of one or more components through each heat exchanger.

In general vehicles, the front-to-rear arrangement of heat exchangers in the engine compartment along the air intake direction is relatively random, resulting in uneven heat exchange among the heat exchangers. This may even prevent the rearward heat exchanger along the air intake direction from functioning properly (where the airflow temperature is excessively high while the liquid temperature within the exchanger is low, preventing normal cooling of the liquid). Consequently, this can affect the normal use of the vehicle.

### SUMMARY

The present disclosure provides a heat exchanger assembly and a vehicle that can solve the technical problems existing in the related art. The technical solution is as follows:

In the first aspect, the present disclosure provides a heat exchanger assembly, which is applied to a target vehicle, the heat exchanger assembly includes a first heat exchanger, a second heat exchanger, and a third heat exchanger, the first heat exchanger is a heat exchanger for an air conditioner and a battery, the second heat exchanger is a heat exchanger for a motor assembly and an intercooling system, and the third heat exchanger is a heat exchanger for engine coolant;
the first heat exchanger, the second heat exchanger, and the third heat exchanger are disposed in an engine compartment of the vehicle, stacked in an order of the first heat exchanger, the second heat exchanger, and the third heat exchanger along a first direction, and are all connected to the engine compartment, and the first direction is an air intake direction of the engine compartment.

In one possible implementation, the heat exchanger assembly further includes a first switch-type ventilation channel, the first switch-type ventilation channel and the first heat exchanger are arranged along a second direction which is perpendicular to the first direction, the first switch-type ventilation channel is connected to both the first heat exchanger and the engine compartment, and a ventilation direction of the first switch-type ventilation channel is the first direction.

In one possible implementation, the first switch-type ventilation channel is disposed opposite an air intake grille of the engine compartment.

In one possible implementation, dimensions of the first switch-type ventilation channel and the first heat exchanger in a plane perpendicular to the first direction are adapted to the engine compartment.

In one possible implementation, the heat exchanger assembly further includes a pressure sensor and a controller;
the pressure sensor is disposed inside the first heat exchanger and is connected to the first heat exchanger; and
the controller is electrically connected to the pressure sensor and the first switch-type ventilation channel, and the controller is configured to control the first switch-type ventilation channel to open when a pressure detected by the pressure sensor is less than a pressure threshold, and to control the first switch-type ventilation channel to close when the pressure detected by the pressure sensor is greater than or equal to the pressure threshold.

In one possible implementation, there is spacing between the first heat exchanger and the second heat exchanger, and there is spacing between the first switch-type ventilation channel and the second heat exchanger.

In one possible implementation, the heat exchanger assembly further includes a plurality of first air guide vanes disposed at an end of the first switch-type ventilation channel away from the air intake grille and are connected to the first switch-type ventilation channel, and the plurality of first air guide vanes are configured for divergently guiding airflow.

In one possible implementation, the second direction is the vertical direction, the first switch-type ventilation channel is disposed below the first heat exchanger, and an end of each of the plurality of first air guide vanes close to the second heat exchanger is higher than an end of each of the plurality of first air guide vanes close to the first heat exchanger, and an angle of each of the plurality of first air guide vanes relative to the first direction is positively correlated with height.

In one possible implementation, dimensions of the second heat exchanger and the third heat exchanger in a plane perpendicular to the first direction are adapted to the engine compartment.

In one possible implementation, the heat exchanger assembly further includes a second switch-type ventilation channel, which is arranged along the second direction with the second heat exchanger, the second switch-type ventilation channel is connected to both the second heat exchanger and the engine compartment, and ventilation direction of the second switch-type ventilation channel is the first direction.

In one possible implementation, the second direction is the vertical direction, the first switch-type ventilation channel is disposed opposite the air intake grille of the engine compartment, and a lower edge of the first switch-type ventilation channel abuts against a bottom of the engine compartment, the lower edge of the second switch-type ventilation channel is at the same height as an upper edge of the first switch-type ventilation channel, part of the second heat exchanger is disposed above the second switch-type ventilation channel, while another part is disposed below the second switch-type ventilation channel.

In one possible implementation, dimensions of the second switch-type ventilation channel and the second heat exchanger in a plane perpendicular to the first direction are adapted to the engine compartment.

In one possible implementation, the heat exchanger assembly further includes a temperature sensor and a controller;
the temperature sensor is disposed in the fluid circuit of the second heat exchanger and is connected to the second heat exchanger;
the controller is electrically connected to the temperature sensor and the second switch-type ventilation channel, and the controller is configured to control the second switch-type ventilation channel to open when the temperature detected by the temperature sensor is less than a temperature threshold, and to control the second switch-type ventilation channel to close when the temperature detected by the temperature sensor is greater than or equal to the temperature threshold.

In one possible implementation, the second switch-type ventilation channel is disposed opposite the first switch-type ventilation channel.

In one possible implementation, dimensions of the second switch-type ventilation channel and the second heat exchanger in a plane perpendicular to the first direction are adapted to the engine compartment.

In one possible implementation, the heat exchanger assembly further includes a temperature sensor and a controller;
the temperature sensor is disposed in the fluid circuit of the second heat exchanger and is connected to the second heat exchanger;
the controller is electrically connected to the temperature sensor and the second switch-type ventilation channel, and the controller is configured to control the second switch-type ventilation channel to open when the temperature detected by the temperature sensor is less than a temperature threshold, and to control the second switch-type ventilation channel to close when the temperature detected by the temperature sensor is greater than or equal to a second temperature threshold.

In one possible implementation, the heat exchanger assembly further includes a fan and a controller, the fan is disposed on the side of the third heat exchanger away from the second heat exchanger and is connected to the engine compartment, and the blowing direction of the fan is the same as the air intake direction of the engine compartment;
the controller is electrically connected to the fan, and the controller is configured to:
obtain the driving status of the target vehicle, wherein the driving status includes being stationary and moving; and
control the fan to turn on, when the vehicle is stationary.

In one possible implementation, the controller is further configured to:
obtain a driving speed of the target vehicle; and
control the fan to turn off, when the driving speed is greater than the speed threshold.

In the second aspect, the present disclosure provides a vehicle, which includes the heat exchanger assembly according to the first aspect and its possible implementations.

The beneficial effects brought by the technical solution provided in the present disclosure at least include:
during normal use of the vehicle, generally speaking, the first heat exchanger exchanges heat between the air conditioner and the battery, wherein the fluid heat load is relatively small, that is, the heat carried by the fluid is relatively low. The second heat exchanger exchanges heat between the motor components and the intercooling system, wherein the fluid heat load is relatively large, that is, the heat carried by the fluid is relatively high. The third heat exchanger exchanges heat with the engine coolant, wherein the fluid heat load is the largest, that is, the heat carried by the fluid is the highest. The order of the heat exchangers arranged according to the air intake direction is the first heat exchanger, the second heat exchanger, and the third heat exchanger, that is, they are sorted according to the heat carried by the fluid in the heat exchangers from low to high. After passing through the first heat exchanger, the wind experiences a smaller change in heat compared to passing through the second heat exchanger or the third heat exchanger. After flowing through the previous heat exchanger, the air still has a lower temperature when flowing through the subsequent heat exchanger, which can still effectively cool down the heat exchanger. Thus, the heat exchange among the heat exchanger components is relatively balanced, thereby ensuring normal heat exchange in each heat exchanger and ensuring normal use of the vehicle.

It should be understood that the foregoing general description and the following detailed description are exemplary and explanatory only, and do not limit the present disclosure.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a schematic diagram of a heat exchange circuit of a second heat exchanger according to some embodiments of the present disclosure;
FIG. 2 is a schematic diagram of a heat exchange circuit of a second heat exchanger according to some embodiments of the present disclosure;
FIG. 3 is a schematic structural diagram of a heat exchanger assembly according to some embodiments of the present disclosure;
FIG. 4 is a schematic structural diagram of a heat exchanger assembly according to some embodiments of the present disclosure;
FIG. 5 is a schematic structural diagram of a heat exchanger assembly according to some embodiments of the present disclosure;
FIG. 6 is a schematic structural diagram of a heat exchanger assembly according to some embodiments of the present disclosure;
FIG. 7 is a schematic structural diagram of a heat exchanger assembly according to some embodiments of the present disclosure;
FIG. 8 is a schematic structural diagram of a heat exchanger assembly according to some embodiments of the present disclosure;
FIG. 9 is a schematic structural diagram of a heat exchanger assembly according to some embodiments of the present disclosure;
FIG. 10 is a schematic structural diagram of a heat exchanger assembly according to some embodiments of the present disclosure; and
FIG. 11 is a schematic structural diagram of a heat exchanger assembly according to some embodiments of the present disclosure.

### Legend:

1. first heat exchanger;
2. second heat exchanger;
3. third heat exchanger;
4. first switch-type ventilation channel;
5. pressure sensor;
6. controller;
7. first air guide vane;
8. second switch-type ventilation channel;
9. temperature sensor;
10. fan;
11. air shroud.

### DETAILED DESCRIPTION

For clearer descriptions of the objectives, technical solutions, and advantages of the present disclosure, embodiments of the present disclosure are further described in detail hereinafter with reference to the accompanying drawings.

Unless otherwise defined, technical or scientific terms used herein shall have the ordinary meanings understood by those skilled in the art to which the present disclosure pertains. The terms "first", "second", "third", and similar terms used in the description and claims of the present disclosure do not denote any order, quantity, or importance, but are merely used to distinguish different components. Similarly, terms such as "one" or "a" do not indicate a limitation on quantity, but rather indicate the presence of at least one. Terms such as "including" or "comprising" mean that the elements or items preceding "including" or "comprising" encompass the elements or items listed after "including" or "comprising" and their equivalents, without excluding other elements or items. Terms such as "connected" or "connected to" are not limited to physical or mechanical connections, but may include electrical connections, whether direct or indirect. Terms such as "up", "down", "left", and "right" are only used to indicate relative positional relationships, and when the absolute position of the described object changes, the relative positional relationships may also change accordingly.

Generally, multiple heat exchangers can be arranged in the engine compartment of a vehicle, with each heat exchanger used to cool one or multiple components on the vehicle. The specific cooling steps are follows: the wind enters the air intake grille at the front of the vehicle to carry away the heat from the liquid inside the heat exchanger, thereby achieving the purpose of cooling the liquid inside the heat exchanger. Then, the cooled liquid flows to the interior or surface of various components to carry away the heat from them and achieving the purpose of cooling each component. Disorderly arrangement of heat exchangers in the engine compartment would lead to lower overall heat exchange efficiency, and affect the normal use of the vehicle.

Embodiments of the present disclosure provide a heat exchanger assembly that includes three heat exchangers arranged in a certain order. By exchanging heat among these three heat exchangers, the purpose of cooling various components of a vehicle can be achieved. Moreover, the direction of air flow can be adjusted through a switch-type ventilation channel, thereby regulating the heat exchange intensity of different heat exchangers. The heat exchanger assembly provided in the embodiments of the present disclosure can be installed on an extended-range vehicle. The extended-range vehicle has both an engine and an electric motor. Unlike traditional internal combustion engine vehicles, the engine in the extended-range vehicle is used to provide power to the electric motor. When the battery cannot output power due to power feed, the engine can drive the generator to generate electricity, thereby driving the vehicle.

The following is a separate introduction to each part of the heat exchanger assembly:

### I. First heat exchanger 1

The first heat exchanger 1 is a component that enables heat transfer between two or more fluids at different temperatures, allowing heat to be transferred from the fluid with a higher temperature to the fluid with a lower temperature. The first heat exchanger 1 can be a condenser, which contains a refrigerant circuit. The wind blowing through the condenser can carry away the heat of the refrigerant, thereby reducing its heat. The refrigerant in the condenser flows through the air conditioning system and the battery, providing cold air to the cabin and cooling the battery of electric vehicles. When the first heat exchanger 1 is a condenser, it can control the heat of the refrigerant by compressing the refrigerant.

### II. Second heat exchanger 2

The second heat exchanger 2 is a component that enables heat transfer between two or more fluids at different temperatures, allowing heat to be transferred from the fluid with a higher temperature to the fluid with a lower temperature. The second heat exchanger 2 can be a low-temperature heat exchanger, which contains a water circuit. The wind blowing through the low-temperature heat exchanger can carry away the heat from the water, thereby reducing the heat content of the water.

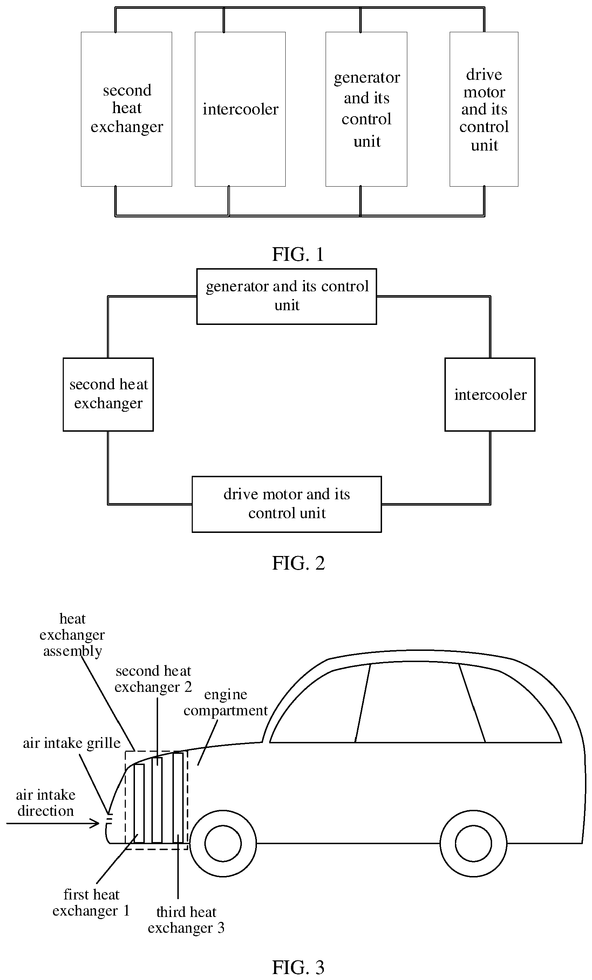

The liquid in the low-temperature heat exchanger can flow through various motor components, including the generator and its control unit, as well as the drive motor and its control unit, to reduce the temperature of the generator, its control unit, and the drive motor and its control unit. Additionally, the liquid in the low-temperature heat exchanger can also flow through the intercooler to cool it down. The intercooler is an accessory for vehicles with superchargers, and its function is to reduce the temperature of the compressed air and improve air exchange efficiency of engine. As shown in FIG. 1, the liquid in the low-temperature heat exchanger flows through various components in the following manner: it flows through the temperature of the intercooler, the generator and its control unit, and the drive motor and its control unit, or as shown in FIG. 2, a single liquid circuit flows through the intercooler, the generator and its control unit, and the drive motor and its control unit. Technicians can set it based on the actual vehicle structure and the cooling needs of various components, and this is not limited by the embodiments of the present disclosure.

### III. Third heat exchanger 3

The third heat exchanger 3 is a component that enables heat transfer between two or more fluids at different temperatures, allowing heat to be transferred from the fluid with a higher temperature to the fluid with a lower temperature. The liquid used to cool the engine can be referred to as coolant. The third heat exchanger 3 can be a high-temperature heat exchanger, which contains a liquid circuit. The wind blowing through the high-temperature heat exchanger can remove the heat from the liquid, thereby reducing the heat of the liquid. The liquid in the high-temperature heat exchanger can be coolant, and the cooled coolant flows through the engine to cool it down. Alternatively, the liquid in the third heat exchanger may not be coolant, but water, for example. The water circuit exchanges heat with the coolant circuit somewhere on the vehicle, which in turn cools the engine coolant. The cooled coolant then flows through the engine to cool it down.

The functions of the first exchanger, the second exchanger, and the third heat exchanger are merely examples of the embodiments of the present disclosure. Different heat exchange components can also be arranged for the heat exchangers, which will not be elaborated in detail in the embodiments of the present disclosure.

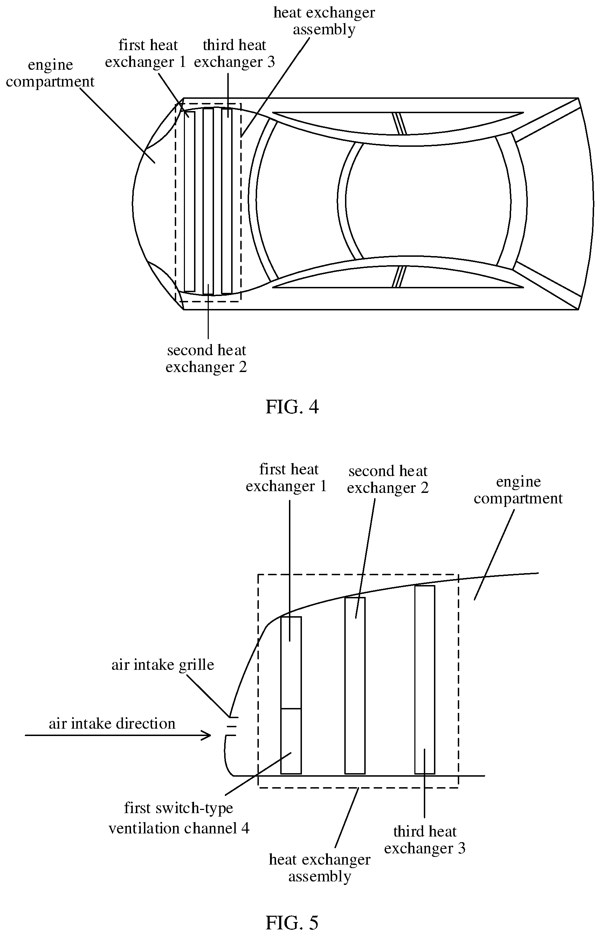

The following describes the arrangement of three heat exchangers, as shown in FIG. 3 and FIG. 4. FIG. 3 is a side view of a vehicle, while FIG. 4 is a top view of the vehicle. The first heat exchanger 1, the second heat exchanger 2, and the third heat exchanger 3 are disposed in the engine compartment of the vehicle, stacked in the order of the first heat exchanger 1, the second heat exchanger 2, and the third heat exchanger 3 along an air intake direction of the engine compartment (referred to as the first direction), and are all connected to the engine compartment. The dimensions of the first heat exchanger 1, the second heat exchanger 2, and the third heat exchanger 3 in a plane perpendicular to the first direction are adapted to the engine compartment.

The heat exchange method of each heat exchanger is to remove the heat from the fluid in the heat exchanger through the wind blown in from the air intake grille, thereby reducing the heat of the fluid in the heat exchanger. The order in which the heat exchangers are arranged according to the air intake direction is as follows: the first heat exchanger 1, the second heat exchanger 2, and the third heat exchanger 3. Generally, the fluid heat load in the first heat exchanger 1 is relatively low, that is, the heat carried by the fluid is relatively low. The fluid heat load in the second heat exchanger 2 is relatively high, that is, the heat carried by the fluid is relatively high. The fluid heat load in the third heat exchanger 3 is the highest, that is, the heat carried by the fluid is the highest. Thus, along the air intake direction, the heat carried by the fluid in the heat exchangers is sorted from low to high. After passing through the first heat exchanger, the wind experiences a smaller change in heat compared to passing through the second heat exchanger or the third heat exchanger, achieving the technical purpose of improving heat exchange for the three heat exchangers.

Next, some optional structural features of the heat exchanger assembly are described.

Structural feature I: The heat exchanger assembly also includes a first switch-type ventilation channel 4, a pressure sensor 5, and a controller 6.

As shown in FIG. 5, the first switch-type ventilation channel 4 and the first heat exchanger 1 are arranged along a second direction, which is perpendicular to the first direction. The first switch-type ventilation channel 4 is connected to both the first heat exchanger 1 and the engine compartment, and ventilation direction of the first switch-type ventilation channel 4 is the first direction. The first switch-type ventilation channel 4 can be disposed opposite the air intake grille of the engine compartment. The dimensions of the first switch-type ventilation channel 4 and the first heat exchanger 1 in a plane perpendicular to the first direction are adapted to the engine compartment.

When the first switch-type ventilation channel 4 is closed, all the air blown in through the air intake grille flows through the first heat exchanger 1, thereby increasing the air volume passing through the first heat exchanger 1 and achieving better heat exchange for the fluid in the first heat exchanger 1. When the first switch-type ventilation channel 4 is open, compared to when it is closed, the air volume flowing through the second and third heat exchangers 2 and 3 increases, thereby achieving better heat exchange for the fluid in the second heat exchanger 2 and the third heat exchanger 3. Therefore, the first switch-type ventilation channel 4 can balance the air volume based on the heat exchange requirements of the first heat exchanger 1, thereby better meeting the overall heat exchange requirements of the heat exchanger assembly.

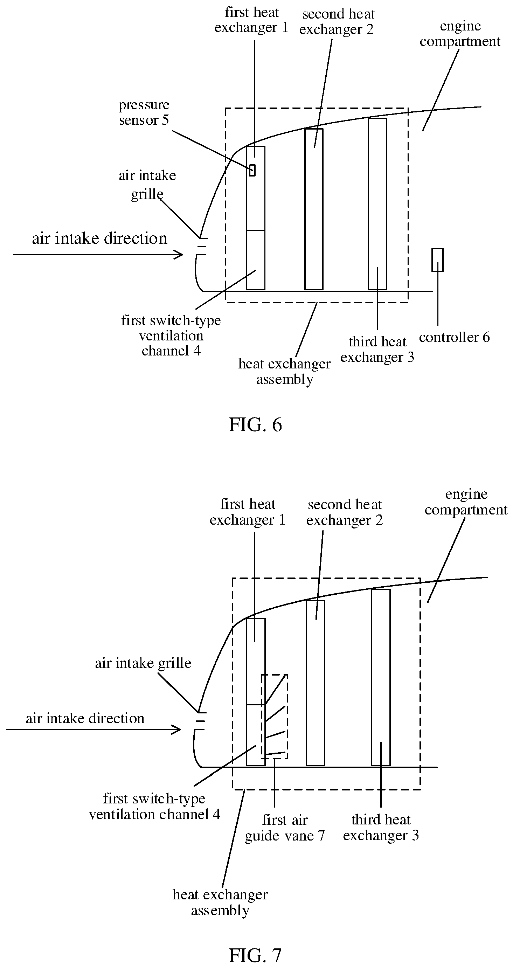

Next, the mechanism for opening or closing the first switch-type ventilation channel 4 will be detailed. As shown in FIG. 6, the heat exchanger assembly is also equipped with a pressure sensor 5 and a controller 6.

The pressure sensor 5 is disposed inside the first heat exchanger 1 and is connected to the first heat exchanger 1. The controller 6 is electrically connected to the pressure sensor 5 and the first switch-type ventilation channel 4. The controller 6 can be a controller on the vehicle with data processing capabilities. The controller 6 is used to control the first switch-type ventilation channel 4 to open when the pressure detected by the pressure sensor 5 is less than a pressure threshold, and to close when the pressure detected by the pressure sensor 5 is greater than or equal to the pressure threshold. The pressure threshold can be set by relevant technical personnel, and is not limited in the embodiments of the present disclosure. The higher the pressure detected by the pressure sensor 5, the greater the heat in the first heat exchanger 1, the higher heat exchange demand.

The first switch-type ventilation channel 4 is added to the heat exchanger assembly, and is arranged side by side with the first heat exchanger 1. Thus, by controlling the opening and closing of the first switch-type ventilation channel 4, the direction of airflow can be adjusted. Compared to when the first switch-type ventilation channel 4 is open, when it is closed, all the air can flow through the first heat exchanger 1, which can increase the heat exchange efficiency of the first heat exchanger 1. Compared to when the first switch-type ventilation channel 4 is closed, when it is open, a part of the air flows through the first heat exchanger 1, while a part of the air flows directly through the second heat exchanger 2, which can further increase the heat exchange efficiency of both the second heat exchanger 2 and the third heat exchanger 3. Therefore, by controlling the opening and closing of the first switch-type ventilation channel 4, the heat exchange of each heat exchanger can be balanced, thereby increasing the overall heat exchange efficiency of all three heat exchangers.

Structural feature II: The heat exchanger assembly not only includes the first switch-type ventilation channel 4, the pressure sensor 5, and the controller 6, but also includes multiple first air guide vanes 7.

As shown in FIG. 7, multiple first air guide vanes 7 are disposed at an end of the first switch-type ventilation channel 4 away from the air intake grille and are connected to the first switch-type ventilation channel 4. These first air guide vanes 7 are configured for divergently guiding the airflow . The second direction is the vertical direction, and the first switch-type ventilation channel 4 is disposed below the first heat exchanger 1. An end of each of the multiple first air guide vanes 7 close to the second heat exchanger 2 is higher than an end of each of the multiple first air guide vanes 7 close to the first heat exchanger 1. An angle of each first air guide vane 7 relative to the first direction is positively correlated with its height, that is, the higher the vane, the greater the angle relative to the first direction. Thus, when the first switch-type ventilation channel 4 is open, the air flowing through the first switch-type ventilation channel 4 can be guided by the air guide vanes, allowing the airflow passing through the first switch-type ventilation channel to flow to a greater extent towards upper parts of the second heat exchanger 2 and the third heat exchanger 3, thereby achieving better heat exchange for the fluid in the second heat exchanger 2 and the third heat exchanger 3.

The multiple first air guide vanes 7 are arranged at the end of the first switch-type ventilation channel 4 away from the air intake grille, and the direction of each of the first air guide vanes 7 is related to the height of the air guide page from the page. When the airflow passes through the first switch-type ventilation channel 4, it continues to flow in the direction of the air guide vanes. Therefore, compared to a configuration without the first air guide vanes 7, installing the first air guide vanes 7 enables the airflow that has not passed through the first heat exchanger 1 to not only flow through the part of the second heat exchanger 2 which is disposed directly opposite the first switch-type ventilation channel 4, but also to a large extent flow through the upper part of the second heat exchanger 2. Compared to the airflow that has passed through the first heat exchanger 1, the airflow that has not passed through the first heat exchanger 1 carries less heat. Therefore, for the upper parts of the second heat exchanger and the third heat exchanger, heat exchange is performed to the second heat exchanger 2 and the third heat exchanger 3 not only by the airflow passing through the first heat exchanger 1 but also by the airflow that has not passed through the first heat exchanger 1, thereby increasing the heat exchange efficiency of the second heat exchanger.

Structural feature III: The heat exchanger assembly not only includes the first switch-type ventilation channel 4, the pressure sensor 5, the controller 6, and the multiple first air guide vanes 7, but also includes a second switch-type ventilation channel 8 and a temperature sensor 9.

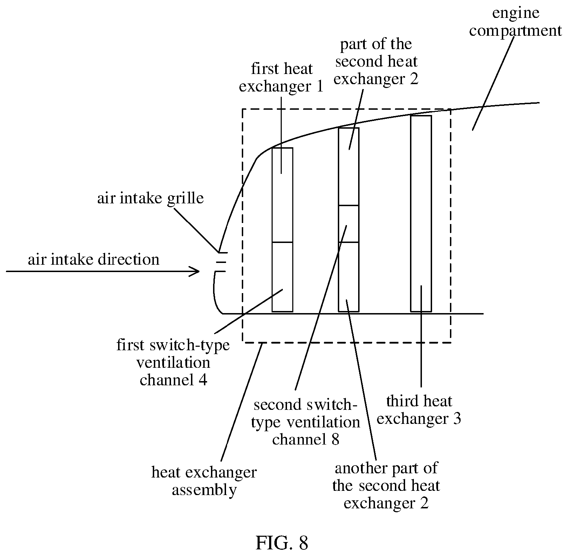

As shown in FIG. 8, the second switch-type ventilation channel 8 and the second heat exchanger 2 are arranged along the second direction, which is the vertical direction. The second switch-type ventilation channel 8 is connected to both the second heat exchanger 2 and the engine compartment. The ventilation direction of the second switch-type ventilation channel 8 is the first direction. The first switch-type ventilation channel 4 is disposed opposite the air intake grille of the engine compartment, and a lower edge of the first switch-type ventilation channel 4 abuts against a bottom of the engine compartment. A lower edge of the second switch-type ventilation channel 8 is at the same height as an upper edge of the first switch-type ventilation channel 4. Part of the second heat exchanger 2 is disposed above the second switch-type ventilation channel 8, while another part of the second heat exchanger 2 is disposed below the second switch-type ventilation channel 8. The dimensions of the second switch-type ventilation channel 8 and the second heat exchanger 2 in a plane perpendicular to the first direction are adapted to the engine compartment. Part of the second heat exchanger 2 is connected to another part of the second heat exchanger 2 through a pipeline.

When the second switch-type ventilation channel 8 is closed, the airflow blown in through the air intake grille passes through the first heat exchanger 1 and then flows entirely through the second heat exchanger 2, thereby increasing the air volume of the second heat exchanger 2 and achieving better heat exchange for the fluid in the second heat exchanger 2 . When the second switch-type ventilation channel 8 is open, compared to when it is closed, the air volume flowing through the third heat exchanger 3 increases, thereby achieving better heat exchange for the fluid in the third heat exchanger 3. Therefore, the second switch-type ventilation channel 8 can balance the air volume based on the heat exchange requirements of the second heat exchanger 2, thereby better meeting the overall heat exchange requirements of the heat exchanger assembly.

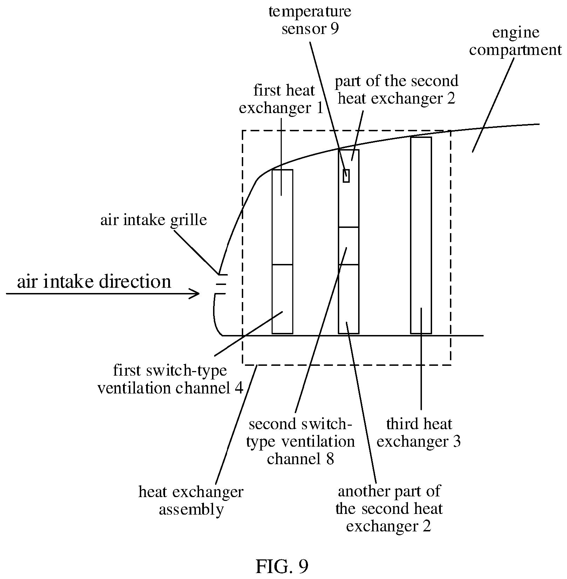

The following is a detailed introduction to the opening mechanism or the closing mechanism of the second switch-type ventilation channel 8. As shown in FIG. 9, the heat exchanger assembly is also equipped with a temperature sensor 9 and a controller 6.

The temperature sensor 9 is disposed in the fluid circuit of the second heat exchanger 2 and is connected to the second heat exchanger 2. The controller 6 is electrically connected to the temperature sensor 9 and the second switch-type ventilation channel 8. The controller 6 is used to control the second switch-type ventilation channel 8 to open when the temperature detected by the temperature sensor 9 is less than a temperature threshold, and to close when the temperature detected by the temperature sensor 9 is greater than or equal to the temperature threshold. The temperature threshold can be set by relevant technical personnel, and is not limited in the embodiments of the present disclosure.

Optionally, the second switch-type ventilation channel 8 can be disposed opposite the first switch-type ventilation channel 4. When the second switch-type ventilation channel 8 is disposed opposite the first switch-type ventilation channel 4, the opening mechanism and the closing mechanism of the second switch-type ventilation channel 8 can be the same as the mechanism described above. For related content, please refer to the above description, and embodiments of the present disclosure will not provide further detailed description hereinafter.

The arrangement of both the first switch-type ventilation channel 4 and the second switch-type ventilation channel 8 in the heat exchanger assembly can not only take into account the heat exchange requirements of the first heat exchanger 1, but also those of the second heat exchanger 2, thereby enhancing the overall heat exchange efficiency of the heat exchanger assembly.

Optionally, the second switch-type ventilation channel 8 can be similar to the first switch-type ventilation channel 4, with second air guide vanes arranged at the end away from the air intake grille, and the second air guide vanes are connected to the second switch-type ventilation channel 8 for divergent airflow guidance. The direction of the second air guide vanes can be related to height. When the second switch-type ventilation channel 8 is staggered with the first switch-type ventilation channel 4, a direction of a second air guide vane at a center height of the second switch-type ventilation channel 8 can be set to the first direction. For other second air guide vanes, the greater the difference from the center height, the greater the angle from the first direction. When the first switch-type ventilation channel 4 is disposed opposite the second switch-type ventilation channel 8, the direction of the second air guide vane can be the same as that of the first air guide vane at the same height, which will not be elaborated here.

The second air guide vanes are arranged at a point on the second switch-type ventilation channel 8 that is away from the air intake grille, which can guide the incoming airflow and make it continue to flow in the direction of the air guide vanes. Providing the air guide vane allows the air flowing through the second switch-type ventilation channel 8 to pass through the third heat exchanger to the greatest extent, thereby increasing the heat exchange efficiency of the third heat exchanger.

Structural feature IV: The heat exchanger assembly also includes a fan 10.

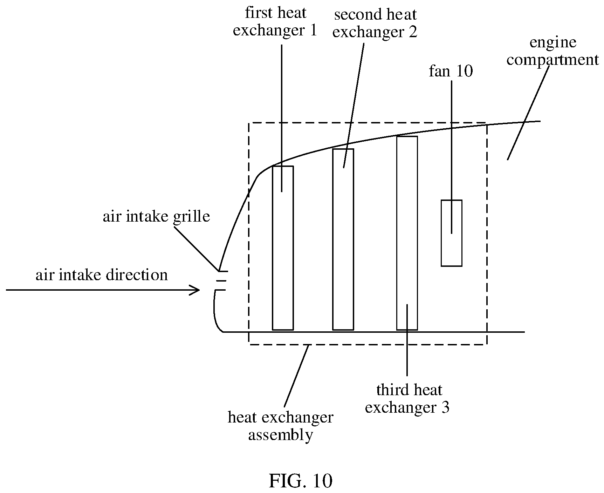

The heat exchanger assembly may further include a fan 10, as shown in FIG. 10. The rotation of fan 10 allows wind to blow into the engine compartment along the air intake direction. Fan 10 is electrically connected to controller 6. The controller can obtain the driving state of the vehicle, which includes both stationary and moving states. When the vehicle is moving, the driving speed of the vehicle can also be obtained. When the driving speed of the vehicle is greater than the speed threshold, the air intake grille of the vehicle can allow more wind to enter under driving conditions, at which point fan 10 can be controlled to turn off. The speed threshold can be determined by relevant technical personnel according to actual conditions, and will not be elaborated further in the embodiments of the present disclosure. When the vehicle is stationary or the driving speed of the vehicle is below the speed threshold, fan 10 can be controlled to turn on, and the power of fan 10 can be controlled according to the heat exchange requirements of each heat exchanger. Specifically, the heat exchange requirements of the first heat exchanger 1 and the second heat exchanger 2 can be sensed by pressure sensor 5 at the first heat exchanger 1 and the temperature sensor 9 at the second heat exchanger 2.

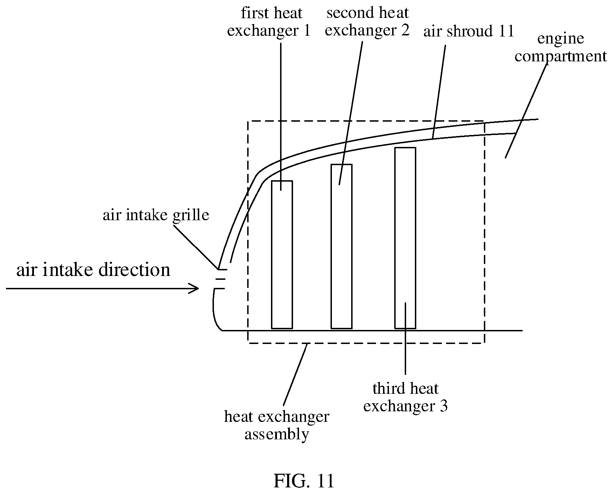

Optionally, the heat exchanger assembly may further include an air shroud 11, as shown in FIG. 11. The air shroud 11 can reduce the loss of wind blown into the engine compartment, thereby maximizing the flow of wind blown into the engine compartment through various heat exchangers and enhancing the airtightness.

In the embodiments of the present disclosure, during normal use of the vehicle, generally speaking, the first heat exchanger exchanges heat between the air conditioner and the battery, where the fluid heat load is relatively small, that is, the heat carried by the fluid is relatively low. The second heat exchanger exchanges heat between the motor components and the intercooling system, where the fluid heat load is relatively large, that is, the heat carried by the fluid is relatively high. The third heat exchanger exchanges heat with the engine, where the fluid heat load is the largest, that is, the heat carried by the fluid is the highest. The order of the heat exchangers arranged according to the air intake direction is as follows: the first heat exchanger, the second heat exchanger, and the third heat exchanger, that is, they are sorted according to the heat carried by the fluid in the heat exchangers from low to high. After passing through the first heat exchanger, the wind experiences a smaller change in heat compared to passing through the second heat exchanger or the third heat exchanger. After flowing through the previous heat exchanger, the air still has a lower temperature when flowing through the subsequent heat exchanger, which can still effectively cool down the heat exchanger. Thus, the heat exchange among the heat exchanger components is relatively balanced, thereby ensuring normal heat exchange in each heat exchanger and ensuring normal use of the vehicle.

The embodiments of the present disclosure provide a vehicle that includes the aforementioned heat exchanger assembly. The heat exchanger assembly can be installed in the engine compartment of the vehicle, and each heat exchanger assembly exchanges heat with the fluid in each heat exchanger through blown air. The cooled fluid flows through various components on the vehicle, thereby regulating the temperature of these components.

Those skilled in the art can understand that all or part of the steps to implement the above embodiments can be completed through hardware, or by instructing relevant hardware through a program. The program can be stored in a computer-readable storage medium, and the aforementioned storage medium can be a read-only memory, a magnetic disk, an optical disk, etc.

Described above are merely preferred embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A heat exchanger assembly, wherein the heat exchanger assembly is applied to a target vehicle, and comprises a first heat exchanger (1), a second heat exchanger (2), and a third heat exchanger (3), and wherein the first heat exchanger (1) is a heat exchanger for an air conditioner and a battery, the second heat exchanger (2) is a heat exchanger for a motor component and an intercooling system, and the third heat exchanger (3) is a heat exchanger for engine coolant; and
wherein the first heat exchanger (1), the second heat exchanger (2), and the third heat exchanger (3) are disposed in an engine compartment of the vehicle, stacked in an order of the first heat exchanger (1), the second heat exchanger (2), and the third heat exchanger (3) along a first direction and are all connected to the engine compartment, and the first direction is an air intake direction of the engine compartment.

2. The heat exchanger assembly according to claim 1, wherein the heat exchanger assembly further comprises a first switch-type ventilation channel (4), the first switch-type ventilation channel (4) and the first heat exchanger (1) are arranged along a second direction which is perpendicular to the first direction, the first switch-type ventilation channel (4) is connected to the first heat exchanger (1) and the engine compartment respectively, and a ventilation direction of the first switch-type ventilation channel (4) is the first direction.

3. The heat exchanger assembly according to claim 2, wherein the first switch-type ventilation channel (4) is disposed opposite an air intake grille of the engine compartment.

4. The heat exchanger assembly according to claim 2, wherein dimensions of the first switch-type ventilation channel (4) and the first heat exchanger (1) in a plane perpendicular to the first direction are adapted to the engine compartment.

5. The heat exchanger assembly according to claim 2, wherein the heat exchanger assembly further comprises a pressure sensor (5) and a controller (6);
the pressure sensor (5) is disposed inside the first heat exchanger (1) and is connected to the first heat exchanger (1); and
the controller (6) is electrically connected to the pressure sensor (5) and the first switch-type ventilation channel (4), and the controller (6) is configured to control the first switch-type ventilation channel (4) to open when a pressure detected by the pressure sensor (5) is less than a pressure threshold, and to control the first switch-type ventilation channel (4) to close when the pressure detected by the pressure sensor (5) is greater than or equal to the pressure threshold.

6. The heat exchanger assembly according to claim 2, wherein there is spacing between the first heat exchanger (1) and the second heat exchanger (2), and there is spacing between the first switch-type ventilation channel (4) and the second heat exchanger (2).

7. The heat exchanger assembly according to claim 6, wherein the heat exchanger assembly further comprises a plurality of first air guide vanes (7) disposed at an end of the first switch-type ventilation channel (4) away from the air intake grille and connected to the first switch-type ventilation channel (4), and the plurality of first air guide vanes (7) are configured for divergently guiding airflow.

8. The heat exchanger assembly according to claim 7, wherein the second direction is a vertical direction, the first switch-type ventilation channel (4) is disposed below the first heat exchanger (1), an end of each of the plurality of first air guide vanes (7) close to the second heat exchanger (2) is higher than an end of each of the plurality of first air guide vanes (7) close to the first heat exchanger (1), and an angle of each of the plurality of first air guide vanes (7) relative to the first direction is positively correlated with height.

9. The heat exchanger assembly according to claim 1, wherein dimensions of the second heat exchanger (2) and the third heat exchanger (3) in a plane perpendicular to the first direction are adapted to the engine compartment.

10. A vehicle, wherein the vehicle comprises a heat exchanger assembly according to any one of claims 1 to 9.
